(19) Europäisches Patentamt
European Patent Office
Office européen des brevets

(11) Publication number: 0 090 427 B1

(12) EUROPEAN PATENT SPECIFICATION

(45) Date of publication of patent specification: 13.08.86

(51) Int. Cl.$^4$: C 08 K 5/06, C 08 K 5/18, C 08 L 23/02, H 01 B 3/44

(21) Application number: 83103194.1

(22) Date of filing: 30.03.83

(54) **Compositions of hydrocarbon-substituted diphenyl amines and high molecular weight polyethylene glycols; and the use thereof as water-tree retardants for polymers.**

(30) Priority: 31.03.82 US 362959

(43) Date of publication of application: 05.10.83 Bulletin 83/40

(45) Publication of the grant of the patent: 13.08.86 Bulletin 86/33

(84) Designated Contracting States: BE CH DE FR GB IT LI SE

(58) References cited:
US-A-4 305 849

PATENTS ABSTRACTS OF JAPAN, vol. 4, no. 101, 19th July 1980, page 146C19

(73) Proprietor: UNION CARBIDE CORPORATION
39 Old Ridgebury Road
Danbury Connecticut 06817 (US)

(72) Inventor: Turbett, Robert John
1738 Long Hill Road
Millington New Jersey 07946 (US)

(74) Representative: Barz, Peter, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz
Siegfriedstrasse 8
D-8000 München 40 (DE)

EP 0 090 427 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to water-tree retardants comprising hydrocarbon-substituted diphenyl amines and high molecular weight polyethylene glycols and the use thereof as additives to polymeric compositions, as for example, compositions based on ethylene polymers. The resultant compositions are useful as extrudates about electrical conductors providing insulation thereon which is resistant to water-treeing.

The service life of insulated power cables is known to be shortened by a prebreakdown phenomenon termed water-treeing. Consequently, insulation based on polymeric compositions, as for example, compositions of ethylene polymers, has been modified by the addition thereto of various additives for the purpose of providing insulation characterized by resistance to water-treeing. Water-trees occur when insulation is subjected to an electrical field, over a prolonged period of time, while in an environment in which water is present. Water-trees are so named because of a resemblance to branched trees. In actuality, water-trees are fine passages or voids which are visibly white when filled with water but become invisible when dry. For purposes of observation, specimens with water-trees must be boiled in water or dyed.

Water-trees start to grow at points of voltage stress in the insulation. Points of stress might be at sites in the insulation at which there are voids, contamination, or irregularities, for instance at the interface between the insulation and a semi-conductive layer. In the case of voids or contamination, trees tend to form at opposite sides of the point of stress (the nucleus) and, in time, grow to resemble a bow-tie. Trees initiated at an interface grow in one direction in the form of a bush and are referred to as vented trees. The two types of water-trees, bow-tie and vented, appear to start and to grow by different mechanisms, as indicated by their differing response to many of the water-tree retardants that have been examined.

Up until the present time, no water-tree retardant system has been developed which, when added to a polymeric composition, results in a composition which has a commercially acceptable balance of properties including resistance, over prolonged periods of time, to the formation of bow-tie trees and vented water-trees.

The accompanying drawing is a schematic sectional view showing the apparatus used to cause water-trees of the bow-tie type to grow in a test specimen.

The present invention provides a water-tree retardant additive comprising a hydrocarbon-substituted diphenyl amine and a polyethylene glycol having a molecular weight of 1000 to 20000, the polyethylene glycol being present in an amount of 0.1 to 5 parts by weight per each part by weight diphenyl amine which, when added to polymeric materials such as an ethylene polymer, provides compositions which have a commercially acceptable balance of properties including resistance to the formation of bow-tie water-trees and vented water-trees. The compositions of this invention retain resistance to water-trees over prolonged periods of time, at normal operating or service temperatures of the insulated electrical conductors, about which they are extruded, without undergoing an undesirable degradation of physical or electrical properties. In addition, the compositions of this invention can be cured to water-tree resistant, crosslinked products, without a significant increase in the normal concentrations of the crosslinking agent, i.e., the organic peroxide, by the addition of an appropriate crosslinking booster.

As stated, the water-tree retardants of this invention comprise a composition of a hydrocarbon-substituted diphenyl amine and a high molecular weight polyethylene glycol.

Among diphenyl amines, substituted by one or more hydrocarbon radicals on the aromatic rings, which are suitable for purposes of this invention are those having the formula:

FORMULA I

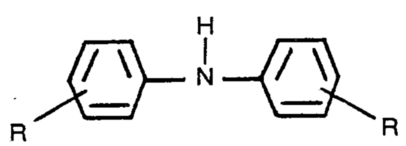

wherein each R, which can be the same or different, is hydrogen or a hydrocarbon radical such as alkyl or aralkyl radicals substituted in the para and/or ortho positions relative to the amino group, provided that at least one R is a hydrocarbon radical.

As a rule, each R has 5 to 18 carbon atoms, preferably 8 to 9 carbon atoms. Illustrative of such radicals are those derived from α-olefins such as *n*-hexene, *n*-heptene, *n*-octene, *n*-nonene and the like as well as radicals derived from styrene, α-methyl styrene and the like.

Particularly desirable for purposes of this invention are liquid diphenyl amines, as described, such as a diphenyl amine alkylated with styrene or octylene. A liquid diphenyl amine alkylated with styrene and sold by Goodyear Tire and Rubber Company under the tradename of Wingstay 29 is an example of such a compound. This compound is obtained by reacting diphenyl amine with styrene under alkylation conditions using a Friedel-Crafts catalyst, according to the following idealized equation:

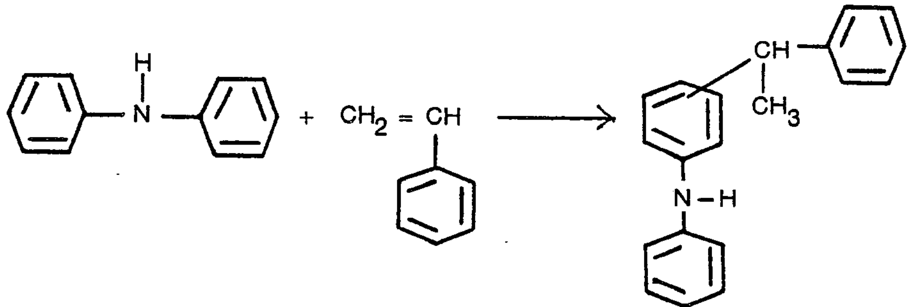

In actuality, it is believed that this compound is a mixture of mono and disubstituted species.

Compositions containing a liquid, hydrocarbon-substituted diphenyl amine, in conjunction with a high molecular weight polyethylene glycol, in addition to being characterized by the properties previously described, are relatively free of "blooming", a term used to describe surface exudation.

Other suitable diphenyl amines are described subsequently herein.

Polyethylene glycols, suitable for purposes of this invention, are those having a molecular weight of 1,000 to 20,000. Particularly desirable polyethylene glycols have a carbon number, that is, number of carbon atoms of at least 30, preferably at least 80. Commercially available polyethylene glycols, suitable for purposes of this invention, are marketed by Union Carbide Corporation under the trademark "Carbowax" and under the designation 20M. These materials are described in Union Carbide Corporation Brochure No. F-4772 I, 1/78 entitled, "Carbowax, Polyethylene Glycol".

Amount of polyethylene glycol, relative to the diphenyl amine is sufficient to provide a composition which, when added to a polymeric material, will result in a polymeric composition which has improved resistance to water-treeing.

Preferably the amount of polyethylene glycol, relative to the hydrocarbon-substituted diphenyl amine is 0.2 to 1 part by weight per 1 part by weight of the diphenyl amine.

Among suitable polymeric material to which the aforenoted tree-retardant composition can be added in order to provide water-tree resistant compositions are ethylene polymers such as normally solid homopolymers of ethylene, copolymers of ethylene and α-olefins and copolymers of ethylene α-olefins and diene monomers. Exemplary of suitable copolymerizable monomers are α-olefins such as propylene, butene-1, hexene-1, and the like; diene monomers such as butadiene, isoprene and the like; wherein the polymers contain at least about 70 percent by weight ethylene.

Preferred copolymers are ethylene-propylene copolymers, ethylene-butene copolymers and the like. These copolymers can be produced under low pressure of 10.35 to 20.7 bar (150 to 300 psi), using a chromium oxide catalyst modified with titanium as disclosed in U.S. Patent 4,011,382 granted March 8, 1977.

If desired, other polymers such as polypropylene, ethylene-propylene rubber, ethylene-propylene diene rubber and the like can be added to the ethylene polymer compositions of this invention.

The compositions of this invention can contain antioxidants such as sterically hindered phenols and amines, polymerized 2,2,4-tetramethylhydroquinoline, 4,4'-thio-bis-(6-t-butyl-3-methylphenol), thiodiethylene-bis-(3,5-ditert-butyl-4-hydroxy)hydrocinnamate, distearylthiodipropionate and the like.

Also, the compositions of the present invention can contain crosslinking agents when the compositions are to be used as vulcanized or crosslinked products rather than as thermoplastic compositions. Vulcanizing or crosslinking agents are well known in the art and include organic peroxides as described in U.S. Patent 3,296,189, granted January 3, 1967. These compounds can be used singly, or in combination with one another, or in combination with a crosslinking booster.

Particularly desirable curable compositions for purposes of this invention comprise an ethylene polymer, a liquid hydrocarbon-substituted diphenyl amine, a high molecular weight polyethylene glycol, an organic peroxide and a silane crosslinking booster having the average formula:

FORMULA II

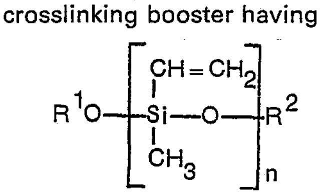

wherein $R^1$ and $R^2$, which can be the same or different, are hydrocarbon radicals generally having 6 to 18 carbon atoms, preferably 12 to 14 carbon atoms and n is an integer having a value of 4 to 20, preferably 4 to 16; or a silane crosslinking booster having the average formula:

FORMULA III

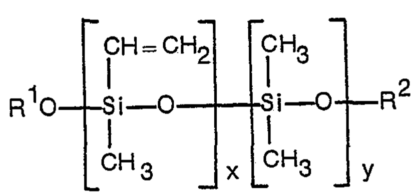

wherein $R^1$ and $R^2$ are as previously defined and x and y, which can be the same or different, are integers having a value of 4 to 8.

Illustrative of suitable radicals for $R^1$ and $R^2$ are alkyl radicals such as octyl, nonyl, decyl, undecyl, dodecyl, stearyl and the like.

Preparation of silanes falling within the scope of Formula II and Formula III can be conveniently prepared by reacting methylvinyldichlorosilane or a mixture of methylvinyldichlorosilane and dimethyldichlorosilane with water and a fatty alcohol or mixtures of fatty alcohols followed by equilibration and neutralization of the acidic residues. The molar ratios of water and alcohol can be varied with respect to each mole of difunctional chlorosilane such that the following stoichiometric equation holds, wherein for purposes of convenience the reactants are shown to be methylvinyldichlorosilane, water and dodecyl alcohol

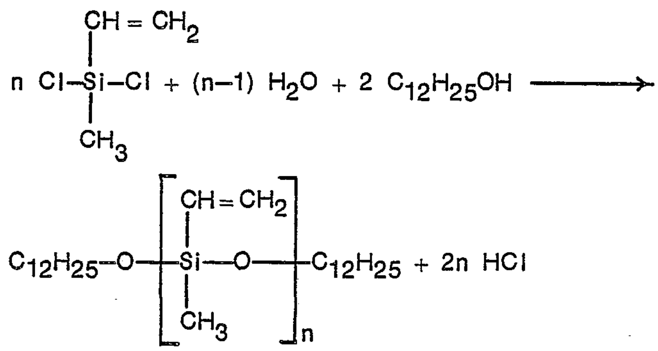

In preparing silanes falling within the scope of Formula III, the amount of methylvinyldichlorosilane (x) plus the amount of dimethylchlorosilane (y) will be equal to n, according to the following stoichiometric reaction scheme:

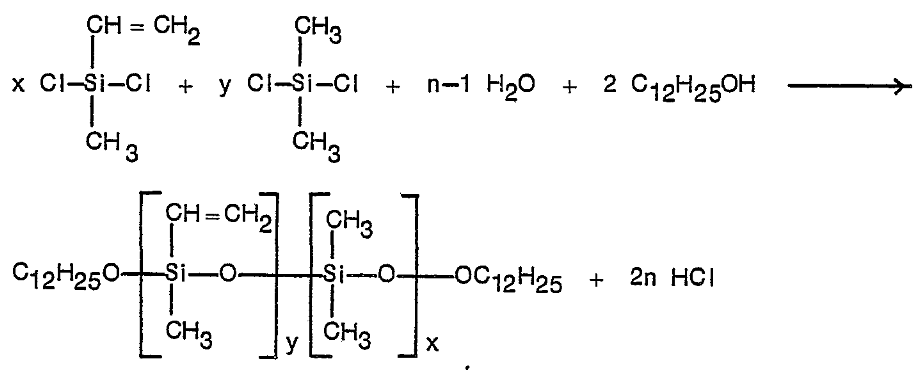

The specifics of the reaction are shown by the procedures detailed below.

Silane 1 — characterized by gel permeation chromatography and nuclear magnetic resonance as having the average formula:

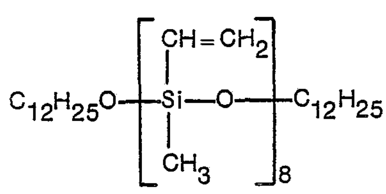

Silane 1 was prepared as follows:

Into a two liter, 3-necked flask equipped with an addition funnel, mechanical stirrer, thermometer and distillation head, with receiver protected by a nitrogen by-pass, was added 846.0 g (6.0 moles) of methylvinyldichlorosilane. From the addition funnel there was added 294.7 g (1.5 moles) of dodecanol to the flask at a moderate rate with stirring. The temperature of the flask decreased to <10°C due to evolution of HCl. After the dodecanol had been added, 89.7 g (5.0 moles, or 95% of the stoichiometric amount) of water were slowly charged from the addition funnel while maintaining the flask temperature at 10 ± 5°C with an external ice bath. After the water was added, the flask was held at 15 ± 5°C for an additional 3 hours

with stirring (the HCl equilibration step). The addition funnel was replaced by a $N_2$-sparge tube and the contents of the flask were slowly heated to 90°C, continuously removing HCl from the flask. After 30 minutes, a sample from the flask was analyzed and found to contain 0.11 meq $Cl^-$/g sample. The remaining amount of water (4.5 g, 0.25 mole) was added as a saturated $Na_2CO_3$ solution. Heating was resumed for an additional 30 minutes at 80°C, continuing the $N_2$-sparge throughout. The remaining acid chloride was neutralized with damp $NaHCO_3$. The resulting produce was filtered, yielding 759.0 g (theory 792.5 g) 96% of theory of a clear, colorless fluid of 16.5 $mm^2$/S (cstk) viscosity (at 25°C), having a chloride content of 0.01 meg/g (0.04%).

The source of dodecanol used in preparing the silanes noted herein was a Procter & Gamble product Co-1214 Fatty Alcohol, a brand name for a mixture containing dodecanol and a small amount of $C_{14}$ alcohol.

Silane 2 — characterized by gel permeation chromatography and nuclear magnetic resonance as having the average formula:

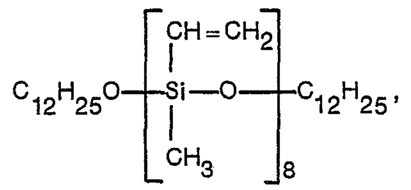

was prepared as follows:

Into a 1 liter, 3-necked flask equipped with an addition funnel, condenser, mechanical stirrer, thermometer, and protected with a nitrogen by-pass was added 282.0 g (2.0 moles) of methylvinyldichlorosilane. From the addition funnel there was added 98.25 g (0.5 mole) of dodecanol, slowly with stirring, while maintaining the temperature between 10—15°C. After the dodecanol had been added, 28.4 g (1.58 moles, 90% of required stoichiometry of 1.75 moles) of water were added with stirring maintaining a temperature between 10—15°C on the reaction vessel by means of an ice bath. The contents of the flask were stirred for 3 hours at a temperature between 10—15°C. The addition funnel was replaced by a tube inserted into the liquid reaction mixture and nitrogen was passed through the mixture while heating to a temperature of 90°C with stirring to remove hydrogen chloride from the flask. After 0.5 hour at a temperature of 90°C, the remaining quantity of water (3.1 g) was added as saturated $Na_2CO_3$. All residual hydrogen chloride was then neutralized as described for the preparation of Silane 1. After filtration, 250 g of a clear, colorless fluid of 18.4 $mm^2$/S (cstk) (25°C) viscosity were obtained.

Silane 3 — characterized by gel permeation chromatography and nuclear magnetic resonance as having the average formula:

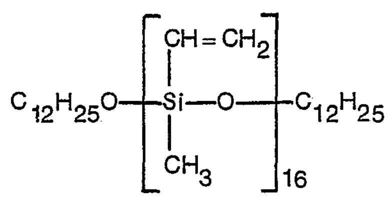

Silane 3 was prepared following the procedure described with respect to Silane 1, by reacting 282.0 g (2 moles) methylvinyldichlorosilane, 46.6 g (0.25 moles) dodecanol and 33.75 g (1.875 moles) $H_2O$ to produce 178.5 g of a clear colorless fluid.

Silane 4 — characterized by gel permeation chromatography and nuclear magnetic resonance as having the average formula:

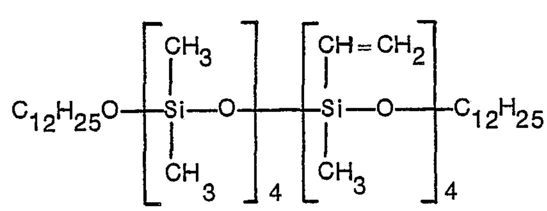

Silane 4 was prepared by following the procedure described with respect to Silane 1, by reacting 141.09 g (1.0 mole) methylvinyldichlorosilane, 129.1 g (1.0 mole) dimethyldichlorosilane, 93.29 g (0.5 mole) dodecanol and 31.5 g (1.75 moles) water to produce 193.5 g of a clear, colorless fluid.

In formulating the compositions of this invention, the amount of hydrocarbon-substituted diphenyl amine, high molecular weight polyethylene glycol, organic peroxide and silane crosslinking booster, based on the total weight of the composition are as follows:

The diphenyl amine is present, along with the high molecular weight polyethylene glycol, in an amount sufficient to improve the water-tree resistance of the composition, generally in an amount of 0.2 to 2 percent by weight, preferably 0.5 to 1 percent by weight.

The high molecular weight polyethylene glycol, along with the diphenyl amine, is present in an amount sufficient to improve the water-tree resistance of the composition, generally in an amount of 0.2 to 1 percent by weight, preferably 0.2 to 0.5 percent by weight.

The organic peroxide is present in an amount sufficient to cure the composition to a crosslinked product, generally in an amount of 1 to 3 percent by weight, preferably in an amount of 1.5 to 2 percent by weight.

The crosslinking booster is present in an amount of 0.5 to 2 percent by weight, preferably 0.5 to 1.5 percent by weight.

It is to be noted that mixtures of ingredients, as disclosed herein, can be used if so desired.

The following is a description of materials used to conduct the Examples and Controls of Table I and Table II, which follow.

DESCRIPTION OF THE POLYMERS

Polymer A — Copolymer of ethylene and *n*-butene having a melt index of 0.7 and a density of 0.92.
Polymer B — Polyethylene having a melt index of 2 and a density of 0.92.
Polymer C — Polyethylene having a melt index of 0.2 and a density of 0.92.

DESCRIPTION OF THE DIPHENYL AMINES (DPA)

I. Diphenyl amine alkylated with styrene (Wingstay® 29-Goodyear Tire and Rubber Company) — liquid
II. Diphenyl amine alkylated with diisobutylene (Naugalube® 438L-Uniroyal, Inc.) — liquid
III. Diphenyl amine alkylated with octylene (Stalite®-R.T. Vanderbilt Company, Inc.) — liquid
IV. Diphenyl amine alkylated with α-methyl styrene (Naugard® 445-Uniroyal, Inc.) — solid
V. Diphenyl amine alkylated with octylene (Stalite-S-R.T. Vanderbilt Company, Inc.) —solid

DESCRIPTION OF ANTIOXIDANTS (AO)

AO-1 4,4′-thio-bis-(6-*t*-butyl-3-methylphenol)
AO-2 Distearylthiodipropionate
AO-3 Thiodiethylene-bis-(3,5-di-*t*-butyl-4-hydroxy)hydrocinnamate

POLYETHYLENE GLYCOL

Polyethylene glycol — molecular weight about 4000 — sold under the trademark "Carbowax" by Union Carbide Corporation

Polyethylene glycol — molecular weight about 20,000 — sold under the designation 20M by Union Carbide Corporation.

Procedures used in formulating and testing compositions of Table I are described below.

Ethylene polymer, alkylated diphenyl amine and high molecular weight polyethylene glycol were charged into a Brabender mixer and compounded to a melt temperature of about 150°C. The resultant composition was granulated and compression molded into test plaques at a temperature of 160°C.

Vented Water-Trees — measured as Water Tree Growth Rate (WTGR) — determined as described in detail in U.S. Patent 4,263,158 granted April 21, 1981. WTGR was determined under the following conditions — 1 KHz, 5 KV, 72 hours.

By definition, the WTGR of a composition to which no water-tree resistant additive has been added, is 1.0 (Control 6 in Table I; Control A in Table II).

Bow-Tie Water-Trees — determined by viewing under a microscope, magnification 40X, specimens prepared as described for the WTGR test and noting the number and size of the bow-tie trees. Each test specimen was rated qualitatively on a scale of 0 (no bow-tie water-trees) to 4 (numerous bow-tie water-trees).

Blooming — determined by molding specimens 0.254 mm (1/100 of an inch) thick, allowing the specimens to stand at room temperature for one month, visually examining the surface of the specimens for exudation and making a qualitative evaluation.

From a commercial standpoint, the primary aims with respect to compositions to be used as insulation about electrical conductors, which in turn are to be exposed to a water environment, are:

WTGR — equal to or less than 0.2
Bow-Tie Water Tree Rating — less than 4
Blooming — low level of surface exudation

The Examples of Table I and Table II illustrate the present invention and are not intended to limit the scope thereof.

Amounts noted in the Tables are in parts by weight.

TABLE I

| | Example 1 | Control 1 | Example 2 | Control 2 | Example 3 | Control 3 | Control 4 | Control 5 | Control 6 | Control 7 |
|---|---|---|---|---|---|---|---|---|---|---|
| Polymer A | 98.75 | 99.25 | 98.75 | 99.5 | 99.0 | 99.5 | 98.9 | 99.5 | — | 99.9 |
| Polymer C | — | — | — | — | — | — | — | — | 99.9 | — |
| DPA I | 0.75 | 0.75 | — | — | — | — | — | — | — | — |
| DPA II | — | — | — | — | — | — | — | — | — | — |
| DPA III | — | — | 0.75 | 0.5 | — | — | — | — | — | — |
| DPA IV | — | — | — | — | 0.5 | 0.5 | — | — | — | — |
| DPA V | — | — | — | — | — | — | — | 0.5 | — | — |
| Polyethylene Glycol Molecular Weight 4000 | — | — | — | — | — | — | 1.0 | — | — | — |
| Polyethylene Glycol Compound 20M | 0.5 | — | 0.5 | — | 0.5 | — | — | — | — | — |
| AO—1 | — | — | — | — | — | — | — | — | 0.1 | — |
| AO—3 | — | — | — | — | — | — | 0.1 | — | — | 0.1 |
| WTGR | 0.16 | 0.73 | 0.09 | 0.4 | 0.15 | 0.26 | 0.29 | 0.44 | 1.0 | 1.0 |
| Blooming | Low-Medium | Heavy | Low | Low | Low | Heavy | Low | Low | Low | Low |
| Bow-Tie Water-Tree Rating | 2 | 4 | 2 | 4 | 1 | 4 | 0 | 4 | — | 4 |

The crosslinked compositions of Table II were prepared by charging the ingredients into a Brabender mixer and compounding the resultant mixture to a melt temperature of about 120°C. Each composition was granulated and compression molded into test specimens at a temperature of 125°C. Test specimens were cured while in the mold at a temperature of 180°C. Before testing for WTGR, each cured test specimen was annealed for 15 minutes in an oven which was at a temperature of 115°C after which peroxide residues were removed by heating the test specimens for seven days in a vacuum oven which was at a temperature of 85°C.

Tests reported in Table II were conducted as follows:

WTGR — determined at 5 KV, 1 KHz, 72 hours

Degree of cure for each composition was determined by the Monsanto Rheometer test, described in detail in U.S. Patent 4,018,852 granted April 19, 1977, and reported in kg.cm (lbs.-inch).

Resistivity to physical degradation — determined using cured specimens prepared as described above, by testing for retention of elongation according to procedures described in ASTMD-638.

Blooming — determined by allowing uncured molded specimens to stand for one month at temperatures ranging from 7°C to 60°C, visually examining the surface of the specimens for exudation and making a qualitative evaluation.

Bow-Tie Water-Trees — determined, for each composition, by molding two sheets, each 0.51 mm (0.02 inch) thick, placing a small amount of powdered NaCl at the interface of the two sheets and molding the two sheets together at a temperature of 125°C to form test specimens. Test specimens were cured in a mold at a temperature of 180°C. Peroxide residues were removed by heating the test specimens for seven days in a vacuum oven which was at a temperature of 85°C.

Referring now to the accompanying drawings, test specimen (2) was placed and held at the center opening of glass vessel (4) dividing glass vessel (4) into two compartments. Test specimen (2) was in contact with 0.1 normal aqueous solution of sodium chloride (6) contained in glass vessel (4). Aqueous solution (6) was connected to a voltage source (not shown) through a high voltage wire lead (8) and grounded through ground wire (10). An AC voltage — 5 KV, 1 KHz was applied to the lead wire for 2 days. After the two day period, the specimen was dyed with aqueous methylene blue solution which made the water-trees visible. Each test specimen was examined visually under a microscope, magnification of 40X, and rated qualitatively on a scale of 0 (no bow-tie water-trees) to 4 (numerous bow-tie water-trees).

The primary commercial aims with respect to WTGR, Bow-Tie Water-Trees and Blooming have been described previously.

The primary commercial aim with respect to degree of cure is 55.3 ± 4.6 kg.cm (48 ± 4 lbs.-inch); percent retention of elongation, 7 days at 150°C, greater than 75 percent.

TABLE II

| Composition | Control A | Control B | Control C | Control D | Control E | Example 4 | Example 5 |
|---|---|---|---|---|---|---|---|
| Polymer C | 99.9 | — | — | — | — | — | — |
| Polymer B | — | 97.94 | 96.94 | 96.95 | 96.05 | 96.45 | 95.55 |
| Silane 1 | — | — | — | 0.6 | 1.50 | 0.6 | 1.50 |
| Polyethylene Glycol — 4000 MW | — | — | 1.0 | — | — | — | — |
| Polyethylene Glycol — Compound 20M | — | — | — | — | — | 0.50 | 0.50 |
| DPA—1 | — | — | — | 0.75 | — | 0.75 | — |
| DPA 2 | — | — | — | — | 0.75 | — | — |
| DPA 3 | — | — | — | — | — | — | 0.75 |
| Dicumyl peroxide | — | 1.7 | 1.7 | 1.7 | 1.7 | 1.7 | 1.7 |
| AO—1 | 0.1 | — | — | — | — | — | — |
| AO—2 | — | 0.18 | 0.18 | — | — | — | — |
| AO—3 | — | 0.18 | 0.18 | — | — | — | — |
| Properties | | | | | | | |
| Cure Level, Lbs.-Inch (kg·cm) | — | 46 (53) | 40 (46) | 44 (50.7) | 49 (56.5) | 48 (55.3) | 53 (61) |
| WTGR | 1.0 | 1.0 ± .25 | 0.24 | 0.34 | 0.37 | 0.10 | 0.02 |
| Bow Tie Water-Trees-Rating | — | 4 | 0 | 4 | 4 | 1 | 3 |
| Percent Retention of Elongation 7 Days at 150°C | — | 90 | 10 | 100 | 8 | 90 | 60 |
| Blooming | — | Low | Low | Med | Low | Low | Heavy |

Melt index, as noted herein, is in decigrams per minute determined by ASTM test D-1238.
Density, as noted herein, is in grams per cubic centimeter determined by ASTM test D-1505.

**Claims**

1. A Water-tree retardant additive which serves to improve resistance to water-treeing in polymeric compositions, comprising a hydrocarbon-substituted diphenyl amine and a polyethylene glycol having a molecular weight of 1000 to 20000, the polyethylene glycol being present in an amount of 0.1 to 5 parts by weight per each part by weight diphenyl amine.

2. A water-tree retardant additive as defined in claim 1 comprising a liquid, hydrocarbon-substituted diphenyl amine and a polyethylene glycol in an amount of 0.2 to 1 part by weight per each part by weight diphenyl amine.

3. A water-tree retardant additive as defined in claims 1 or 2 wherein the said amine is diphenyl amine alkylated with styrene, octylene or α-methyl styrene.

4. A water-tree retardant additive as defined in any of claims 1—3 wherein the said glycol has a molecular weight of 4,000 or 20,000.

5. A composition, suitable for improving the water-treeing resistance and for crosslinking a polymeric composition, comprising a water-tree retardant additive according to any of claims 1—4 and an organic peroxide.

6. A composition as defined in claim 5, additionally comprising a crosslinking booster.

7. A composition as defined in claim 6 wherein the crosslinking booster has the formula:

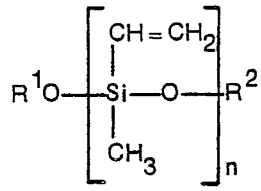

wherein $R^1$ and $R^2$ are hydrocarbon radicals and n is an integer having a value of 4 to 16.

8. A composition as defined in claim 7 wherein the crosslinking booster is a methylvinyl siloxane, end blocked with $C_{12}$ hydrocarbon and n has a value of 8 or 16.

9. A composition as defined in claim 6 wherein the crosslinking booster has the formula:

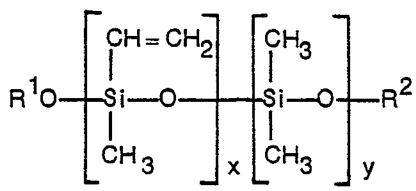

wherein $R^1$ and $R^2$ are hydrocarbon radicals and x and y are integers having a value of 4 to 8.

10. A composition as defined in claim 9 wherein the silane is end blocked with $C_{12}$ hydrocarbon and x and y each have a value of 4.

11. A polymeric composition, having improved resistance to water-treeing, containing a water-tree retardant additive according to any of claims 1—4 in an amount sufficient to improve the water-treeing resistance of said composition.

12. A crosslinkable polymeric composition having improved resistance to water-treeing, containing a composition according to any of claims 5—10 in an amount sufficient to improve the water-treeing resistance of said composition.

13. A composition as defined in claims 11 or 12, comprising a hydrocarbon-substituted diphenyl amine in an amount of 0.2 to 2 percent by weight and a polyethylene glycol in an amount of 0.2 to 1 percent by weight.

14. A composition as defined in any of claims 11—13, comprising an ethylene polymer such as polyethylene or an ethylene copolymer, preferably an ethylene-butene copolymer.

15. The crosslinked product of the composition of any of claims 12—14.

**Patentansprüche**

1. Wasserbaum-verzögerndes Additiv, das der Verbesserung der Beständigkeit von polymeren Zusammensetzungen gegen Wasserbaumbildung dient, umfassend ein Kohlenwasserstoff-substituiertes Diphenylamin und ein Polyethylenglykol mit einem Molekulargewicht von 1000 bis 20000, wobei das Polyethylenglykol in einer Menge von 0,1 bis 5 Gew.-Teilen pro Gew.-Teil Diphenylamin vorhanden ist.

2. Wasserbaum-verzögerndes Additiv nach Anspruch 1, umfassend ein flüssiges, Kohlenwasserstoff-substituiertes Diphenylamin und ein Polyethylenglykol in einer Menge von 0,2 bis 1 Gew.-Teil pro Gew.-Teil Diphenylamin.

3. Wasserbaum-verzögerndes Additiv nach den Ansprüchen 1 oder 2, worin das Amin mit Styrol, Octylen oder α-Methylstyrol alkyliertes Diphenylamin ist.

4. Wasserbaum-verzögerndes Additiv nach irgendeinem der Ansprüche 1 bis 3, worin das Glykol ein Molekulargewicht von 4000 oder 20000 hat.

5. Zusammensetzung, die geeignet ist zur Verbesserung der Wasserbaumbildungsbeständigkeit und zum Vernetzen einer polymeren Zusammensetzung, umfassend ein Wasserbaumverzögerndes Additiv nach irgendeinem der Ansprüche 1 bis 4 und ein organisches Peroxid.

6. Zusammensetzung nach Anspruch 5, die zusätzlich einen Vernetzungsbeschleuniger umfaßt.

7. Zusammensetzung nach Anspruch 6, worin der Vernetzungsbeschleuniger die Formel:

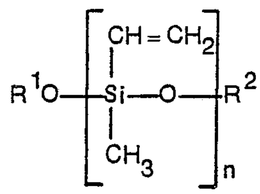

hat, worin $R^1$ und $R^2$ Kohlenwasserstoffreste sind und n eine ganze Zahl mit einem Wert von 4 bis 16 ist.

8. Zusammensetzung nach Anspruch 7, worin der Vernetzungsbeschleuniger ein Methylvinylsiloxan mit $C_{12}$-Kohlenwasserstoff-Endgruppen ist und n einen Wert von 8 oder 16 hat.

9. Zusammensetzung nach Anspruch 6, worin der Vernetzungsbeschleuniger die Formel:

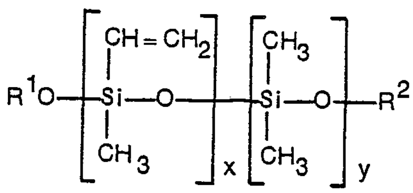

hat, worin $R^1$ und $R^2$ Kohlenwasserstoffreste sind und x und y ganze Zahlen mit einem Wert von 4 bis 8 sind.

10. Zusammensetzung nach Anspruch 9, worin das Silan $C_{12}$-Kohlenwasserstoff-Endgruppen aufweist und x und y jeweils einen Wert von 4 haben.

11. Polymere Zusammensetzung mit verbesserter Wasserbaum-bildungsbeständigkeit, enthaltend ein Wasserbaum-verzögerndes Additiv nach irgendeinem der Ansprüche 1 bis 4 in einer ausreichenden Menge, um die Wasserbaumbildungsbeständigkeit der Zusammensetzung zu verbessern.

12. Vernetzbare polymere Zusammensetzung mit verbesserter Wasserbaumbildungsbeständigkeit, enthaltend eine Zusammensetzung nach irgendeinem der Ansprüche 5 bis 10 in einer ausreichenden Menge, um die Wasserbaumbildungsbeständigkeit der Zusammensetzung zu verbessern.

13. Zusammensetzung nach den Ansprüchen 11 oder 12, umfassend ein Kohlenwasserstoff-substituiertes Phenylamin in einer Menge von 0,2 bis 2 Gew.-% und ein Polyethylenglykol in einer Menge von 0,2 bis 1 Gew.-%.

14. Zusammensetzung nach irgendeinem der Ansprüche 11 bis 13, umfassend ein Ethylenpolymer, wie Polyethylen oder ein Ethylen-Copolymer, vorzugsweise ein Ethylen-Buten-Copolymer.

15. Das vernetzte Produkt der Zusammensetzung nach irgendeinem der Ansprüche 12 bis 14.

**Revendications**

1. Additif retardateur d'arborescence destiné à améliorer la résistance à l'aborescence de l'eau dans des compositions polymériques, comprenant une diphénylamine à substituant hydrocarboné et un polyéthylène-glycol ayant un poids moléculaire de 1000 à 20 000, le polyéthylène-glycol étant présent en une quantité de 0,1 à 5 parties en poids par partie en poids de diphénylamine.

2. Additif retardateur d'arborescence de l'eau suivant la revendication 1, comprenant une diphénylamine liquide à substituant hydrocarboné et un polyéthylène-glycol en une quantité de 0,2 à 1 partie en poids par partie en poids de diphénylamine.

3. Additif retardateur d'aborescence de l'eau suivant la revendication 1 ou 2, dans lequel l'amine consiste en diphénylamine alkylée avec du styrène, de l'octylène ou de l'α-méthylstyrène.

4. Additif retardateur d'arborescence de l'eau suivant l'une quelconque des revendications 1 à 3, dans lequel le glycol a un poids moléculaire de 4000 à 20 000.

5. Composition apte à être utilisée pour améliorer la résistance à l'arborescence de l'eau et pour la réticulation d'une composition polymérique, comprenant un additif retardateur d'aborescence de l'eau suivant l'une quelconque des revendications 1 à 4 et un peroxyde organique.

6. Composition suivant la revendication 5, comprenant en outre un accélérateur de réticulation.

7. Composition suivant la revendication 6, dans laquelle l'accélérateur de réticulation répond à la formule:

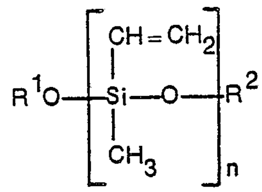

dans laquelle $R^1$ et $R^2$ sont des radicaux hydrocarbonés et *n* est un nombre entier ayant une valeur de 4 à 16.

8. Composition suivant la revendication 7, dans laquelle l'accélérateur de réticulation est un méthylvinylsiloxane, protégé en bout de chaîne par un hydrocarbure en $C_{42}$ et *n* a une valeur de 8 ou 16.

9. Composition suivant la revendication 6, dans laquelle l'accélérateur de réticulation répond à la formule:

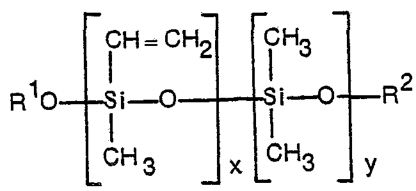

dans laquelle $R^1$ et $R^2$ sont des radicaux hydrocarbonés et *x* et *y* sont des nombres entiers ayant une valeur de 4 à 8.

10. Composition suivant la revendication 9, dans laquelle le silane est protégé en bout de chaîne par un hydrocarbure en $C_{12}$ et *x* et *y* ont chacun la valeur 4.

11. Composition polymérique douée d'une très bonne résistance à l'arborescence de l'eau, contenant un additif retardateur d'arborescence de l'eau suivant l'une quelconque des revendications 1 à 4 en une quantité suffisante pour améliorer la résistance à l'arborescence de l'eau de ladite composition.

12. Composition polymérique réticulable douée d'une très bonne résistance à l'arborescence de l'eau, contenant une composition suivant l'une quelconque des revendications 5 à 10 en une quantité suffisante pour améliorer la résistance à l'arborescence de l'eau de ladite composition.

13. Composition suivant la revendication 11 ou 12, comprenant une diphénylamine à substituant hydrocarboné en une quantité de 0,2 à 2% en poids et un polyéthylène-glycol en une quantité de 0,2 à 1% en poids.

14. Composition suivant l'une quelconque des revendications 11 à 13, comprenant un polymère éthylènique tel qu'un polyéthylène ou un copolymère d'éthylène, de préférence un copolymère éthylène-butène.

15. Le produit réticulé de la composition suivant l'une quelconque des revendications 12 à 14.

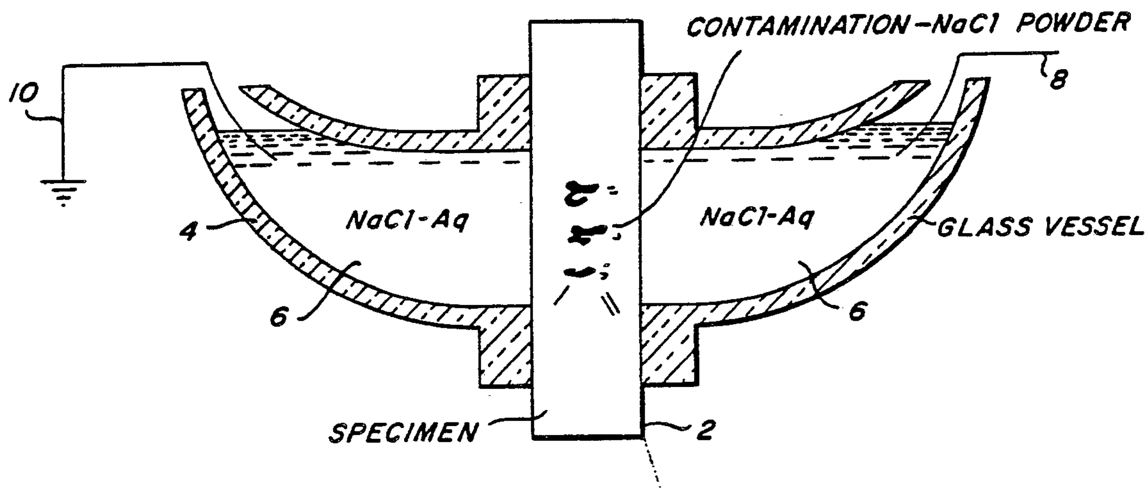
CONTAMINATION-NaCl POWDER
10
8
4
NaCl-Aq
NaCl-Aq
GLASS VESSEL
6
6
SPECIMEN
2